# EUROPÄISCHE PATENTSCHRIFT

(11) **EP 3 303 816 B1**
(45) Veröffentlichungstag und Bekanntmachung des Hinweises auf die Patenterteilung: **10.04.2019**
(21) Anmeldenummer: 16738646.5
(22) Anmeldetag: 25.05.2016
(51) Int. Cl.: F02M 35/12, F16L 37/08

(54) **FAHRZEUGSCHALLDÄMPFER**
VEHICLE SILENCER
SILENCIEUX DE VEHICULE

(30) Priorität: 29.05.2015 AT 504372015
(43) Veröffentlichungstag der Anmeldung: 11.04.2018
(73) Patentinhaber: Henn GmbH & Co KG., 6850 Dornbirn (AT)
(72) Erfinder: HARTMANN, Harald, 6850 Dornbirn (AT)
(74) Vertreter: Burger, Hannes
(86) Internationale Anmeldenummer: PCT/AT2016/050165
(87) Internationale Veröffentlichungsnummer: WO 2016/191780

(56) Entgegenhaltungen:
- EP-A1- 2 295 782
- WO-A1-98/35156
- AT-U1- 13 947
- DE-A1- 19 957 597
- DE-U1-202006 012 636

## Beschreibung

Die Erfindung betrifft einen Fahrzeugschalldämpfer für eine Ladeluftleitung eines Verbrennungsmotors mit Turbolader.

Die DE10 2005 005 865 A1 offenbart einen Fahrzeugschalldämpfer mit einem Resonatorinnenelement, welches zusammen mit der Außenhülle des Fahrzeugschalldämpfers zwei Resonatorkammern bildet.

Weitere Schalldämpfer sind aus der AT 13 947 U1, der EP 2 295 782 A1 und der DE 20 2006 012636 U1 bekannt.

Der vorliegenden Erfindung liegt die Aufgabe zugrunde, einen verbesserten Fahrzeugschalldämpfer zu schaffen, welcher trotz eines möglichst einfachen Aufbaus eine hohe Funktionalität bzw. Wirksamkeit aufweist.

Diese Aufgabe der Erfindung wird durch den in diesem Dokument beschriebenen Fahrzeugschalldämpfer gelöst.

Erfindungsgemäß ist ein Fahrzeugschalldämpfer für eine Ladeluftleitung eines Verbrennungsmotors mit Turbolader ausgebildet. Der Fahrzeugschalldämpfer umfasst:
zumindest ein erstes Gehäuseteil mit einem ersten Außenmantel, welches eine erste Stirnwand umfasst und ein zweites Gehäuseteil mit einem zweiten Außenmantel, welches eine zweite Stirnwand umfasst, wobei die Gehäuseteile in einem Verbindungsbereich miteinander gekoppelt sind und eine Außenhülle des Fahrzeugschalldämpfers bilden;
ein Resonatorinnenelement, welches in zumindest einem der Gehäuseteile gehaltert ist und zumindest eine Kammertrennwand, sowie an einen inneren Umfang der Kammertrennwand anschließend zumindest einen ersten innenliegenden Rohrabschnitt aufweist, wobei durch die beiden Gehäuseteile und das Resonatorinnenelement zumindest eine erste und eine zweite Resonatorkammer ausgebildet sind. Das Resonatorinnenelement weist im Bereich eines äußeren Umfanges des Resonatorinnenelementes zumindest einen ersten außenliegenden Halteab schnitt auf. In der ersten Stirnwand und/oder in der zweiten Stirnwand ist eine Haltenut ausgebildet, in welcher der Halteabschnitt aufgenommen ist.

Von Vorteil an der erfindungsgemäßen Ausbildung des Fahrzeugschalldämpfers ist, dass das Resonatorinnenelement gut in den beiden Gehäuseteilen aufgenommen werden kann. Insbesondere kann ein Resonatorinnenelement aus einem Kunststoffmaterial in einem Gehäuse aus einem Metall aufgenommen werden, wobei vermieden werden kann, dass das Kunststoffmaterial des Resonatorinnenelementes aufgrund unterschiedlicher Wärmedehnungen der beiden Materialen mechanisch überbeansprucht wird und nach einem Betriebszyklus der sichere Halt des Resonatorinnenelementes nicht mehr gewährleistet sein würde.

Ferner kann vorgesehen sein, dass der Halteabschnitt als Rohrabschnitt ausgebildet ist welcher koaxial zum ersten innenliegenden Rohrabschnitt des Resonatorinnenelementes angeordnet ist. Von Vorteil ist hierbei, dass der Halteabschnitt somit konzentrisch zum innenliegenden Rohrabschnitt angeordnet ist und somit die Strömung mittig des Fahrzeugschalldämpfers geführt werden kann.

Alternativ dazu kann vorgesehen sein, dass der Halteabschnitt als Rohrsegment ausgebildet ist. Von Vorteil ist hierbei, dass das Resonatorinnenelement eine verminderte Masse aufweisen kann und zusätzlich erleichtert in den beiden Gehäuseteilen aufgenommen werden kann.

Weiters kann es zweckmäßig sein, dass das erste und das zweite Gehäuseteil aus einem metallischen Werkstoff, insbesondere als Blechumformteil ausgebildet sind. Von Vorteil ist hierbei, dass die beiden Gehäuseteile dadurch robust sowie temperaturunempfindlich ausgeführt werden können. Darüber hinaus ist eine Serienfertigung von derartigen metallischen Gehäuseteilen einfach und kostengünstig möglich. Besonders in der Serienfertigung sind Blechumformteile kostengünstig und mit einer hohen Wiederholgenauigkeit herzustellen, sodass die dadurch hergestellten Fahrzeugschalldämpfer eine hohe Maßgenauigkeit aufweisen.

Ferner kann vorgesehen sein, dass das Resonatorinnenelement aus einem Kunststoffmaterial ausgebildet ist. Von Vorteil ist hierbei, dass das Resonatorinnenelement, welches als Kunststoffteil ausgebildet ist, eine geringe Dichte aufweist und somit die Gesamtmasse des Fahrzeugschalldämpfers möglichst gering gehalten werden kann. Darüber hinaus weist ein Resonatorinnenelement in Form eines Kunststoffteiles hervorragende Schwingungseigenschaften auf, um in einem Fahrzeugschalldämpfer eingesetzt zu werden. Ein weiterer Vorteil eines Kunststoffteiles liegt darin, dass dieses durch Spritzguss hergestellt werden kann und somit auch komplexe Formen gut hergestellt werden können.

Weiters kann vorgesehen sein, dass ein Ringraum zwischen dem Halteabschnitt und dem ersten Außenmantel und/oder dem zweiten Außenmantel ausgebildet ist. Von Vorteil ist hierbei, dass aufgrund des Ringraumes sich das Resonatorinnenelement bei Erwärmung, aufgrund unterschiedlicher Wärmedehnung, prozentual mehr dehnen kann, als die beiden Gehäuseteile, ohne dass dabei das Resonatorinnenelement an die beiden Gehäuseteile anstößt.

Darüber hinaus kann vorgesehen sein, dass am Resonatorinnenelement gegenüberliegend dem ersten innenliegenden Rohrabschnitt ein zweiter innenliegender Rohrabschnitt an die Kammertrennwand anschließt. Von Vorteil ist hierbei, dass dadurch die erste bzw. die zweite Resonatorkammer entsprechend den Erfordernissen der Schalldämpfung ausgeführt werden kann.

Weiters kann vorgesehen sein, dass ein Innendurchmesser des Halteabschnittes kleiner ist als ein Innendurchmesser der Haltenut, wobei dadurch im zusammengebauten Zustand der Halteabschnitt elastisch verformt ist und eine kraftschlüssige Verbindung zwischen Halteabschnitt und Haltenut ausgebildet ist. Dadurch kann eine ausreichend stabile Verbindung zwischen Resonatorinnenelement und den beiden Gehäuseteilen erreicht werden.

Erfindungsgemäß ist ein Sicherungselement im Bereich der Kammertrennwand außenliegend am Resonatorinnenelement angeordnet, wobei das Sicherungselement zwischen dem ersten Gehäuseteil und dem zweiten Gehäuseteil aufgenommen ist. Von Vorteil ist hierbei, dass eine Redundanz zur Aufnahme des Resonatorinnenelementes in den Gehäuseteilen geschaffen werden kann, sodass ein lockerwerden des Resonatorinnenelementes in den Gehäuseteilen unterbunden werden kann.

In einer Weiterbildung kann vorgesehen sein, dass das Sicherungselement als umlaufender Wulst ausgebildet ist. Ein derartiger Wulst ist einfach herzustellen.

Alternativ dazu kann vorgesehen sein, dass das Sicherungselement in Form von einzelnen Positionierzapfen ausgebildet ist. Dadurch kann erreicht werden, dass ein äußerer Ringraum durchströmbar ist.

Weiters kann vorgesehen sein, dass der Halteabschnitt eine Wandstärke zwischen 0,3mm und 5mm, insbesondere zwischen 0,4mm und 2mm, bevorzugt zwischen 1mm und 1,5mm aufweist. Durch eine Wandstärke in diesem Wertebereich kann eine vorteilhafte Verbindung zwischen Resonatorinnenlement und Gehäuseteile realisiert werden.

Ferner kann vorgesehen sein, dass der Halteabschnitt um einen Abstand zwischen 5mm und 50mm, insbesondere zwischen 7mm und 20mm, bevorzugt zwischen 10mm und 15mm gegenüber dem ersten außenliegenden Rohrabschnitt oder gegenüber dem zweiten außenliegenden Rohrabschnitt vorstehend ausgebildet ist. Von Vorteil ist hierbei, dass der Halteabschnitt somit eine ausreichende Länge aufweisen kann um ein Biegemoment aufnehmen zu können.

Schließlich kann vorgesehen sein, dass die Wandstärke des Halteabschnittes geringfügig größer ist als die Spaltweite der Haltenut. Von Vorteil ist hierbei, dass zwischen Halteabschnitt und Haltenut eine Übergangspassung oder eine Presspassung realisiert werden kann, wobei dadurch der Sitz des Resonatorinnenelementes innerhalb der Gehäuseteile zusätzlich verbessert werden kann.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht eines Fahrzeugschalldämpfers;
- Fig. 2: eine Schnittdarstellung des Fahrzeugschalldämpfers mit Schnittführung entlang seiner Mittellinie;
- Fig. 3: eine Schnittdarstellung des Fahrzeugschalldämpfers mit Kupplungskörper;
- Fig. 4: eine Detailansicht des Ringraumes aus der Schnittdarstellung nach Fig. 2;
- Fig. 5: eine Detailansicht der Haltenut aus der Schnittdarstellung nach Fig. 2;
- Fig. 6: eine perspektivische Ansicht des Resonatorinnenelementes;
- Fig. 7: eine Explosionsdarstellung des Fahrzeugschalldämpfers in Schnittdarstellung;
- Fig. 8: eine schematische Darstellung eines Kraftfahrzeuges mit einem an den Turbolader angeschlossenen Fahrzeugschalldämpfer.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

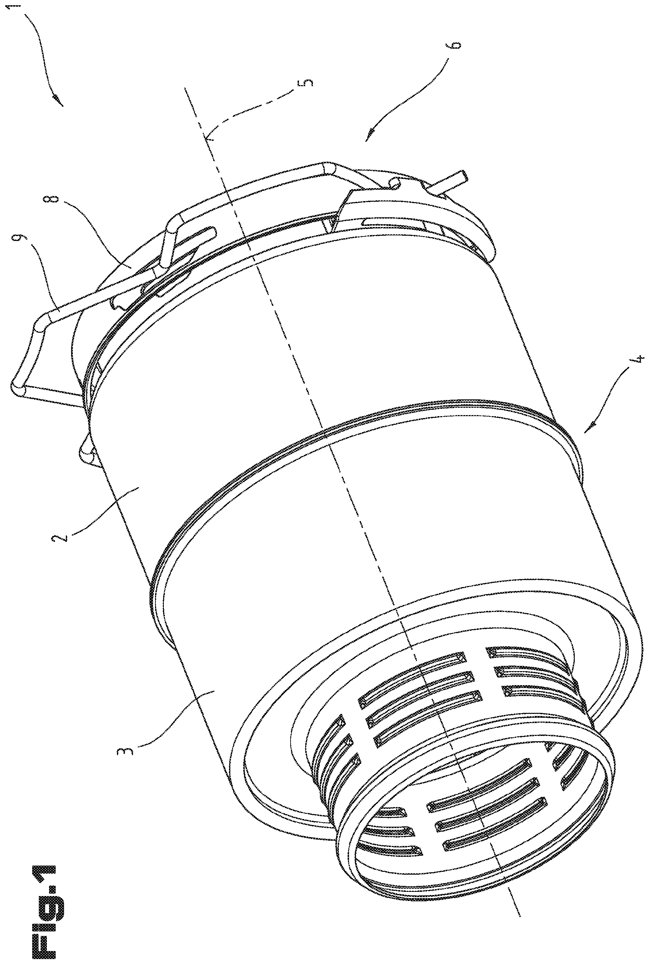

Fig. 1 zeigt eine isometrische Ansicht eines Fahrzeugschalldämpfers 1. Der in dieser Ansicht dargestellte Fahrzeugschalldämpfer 1 weist einen ersten Gehäuseteil 2 und einen zweiten Gehäuseteil 3 auf, welche in einem Füge- bzw. Verbindungsbereich 4 miteinander verbunden sind. Der Fahrzeugschalldämpfer 1 ist in diesem Ausführungsbeispiel als rotationssymmetrischer Hohlkörper ausgebildet und weist daher eine Mittelachse 5 auf. Die in weiterer Folge noch genauer beschriebene, erfindungsgemäße Ausführung ist jedoch nicht auf einen rotationssymmetrischen Hohlkörper beschränkt, sondern ist es auch denkbar, dass der Fahrzeugschalldämpfer 1 etwa einen rechteckigen oder einen polygonen Querschnitt aufweist. Insbesondere ist es möglich, dass der Hohlkörper eine prismatische Grundform besitzt, also an dessen Mantelfläche partiell vorhandene Flachstellen aufweist.

Wie aus Fig. 1 weiteres ersichtlich, kann vorgesehen sein, dass an das erste Gehäuseteil 2 eine Kupplungseinrichtung 6 angeschlossen ist, welche dazu vorgesehen ist, um den Schalldämpfer 1 an einen Turbolader 7 oder an eine Leitung koppeln zu können. Die Kupplungseinrichtung 6 dient besonders dazu, um den Schalldämpfer 1 im Falle eines Schadens des Turboladers 7 oder im Falle einer notwendigen Motorreparatur bedarfsweise möglichst schnell und einfach vom Turbolader 7 entfernen und wieder am Turbolader 7 applizieren zu können. Die Kupplungseinrichtung 6 umfasst einen Kupplungskörper 8, welcher dazu ausgebildet ist um mit einem Anschlussstutzen des Turboladers 7 verbunden, bzw. auf diesen aufgeschoben zu werden. Weiters kann an der Kupplungseinrichtung 6 ein Befestigungselement 9 vorgesehen sein, durch welches der Schalldämpfer 1 am Turbolader 7 befestigt werden kann. Dieses Befestigungselement 9 kann beispielsweise, wie hier dargestellt als Drahtbügel aus einem Federstahl ausgeführt sein.

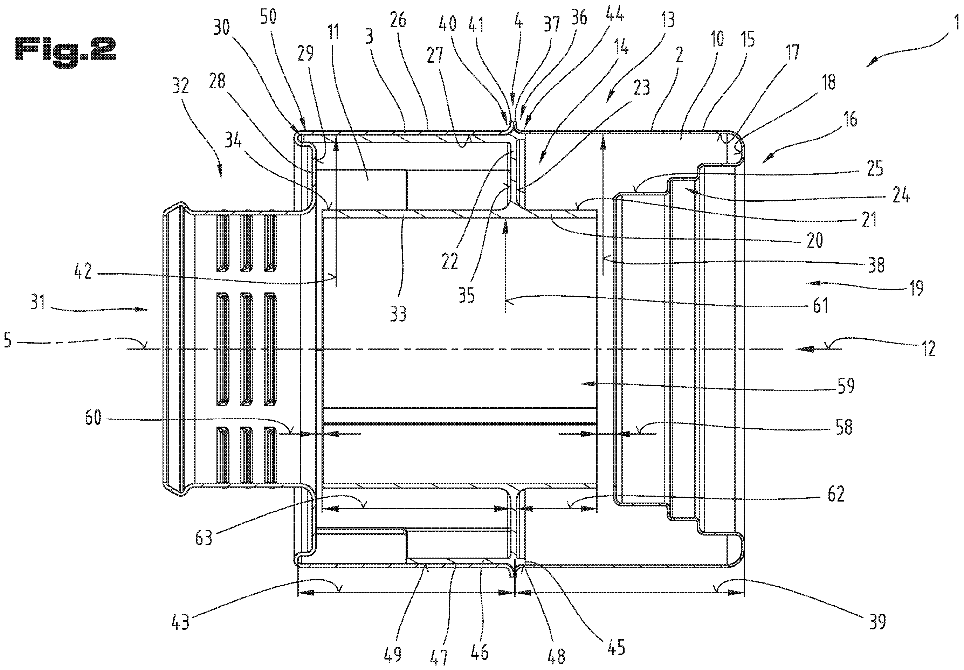

Fig. 2 zeigt einen Schnitt durch den Fahrzeugschalldämpfer 1 entlang seiner Mittelachse 5, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen.

Der Fahrzeugschalldämpfer 1 umfasst eine erste Resonatorkammer 10 und eine zweite Resonatorkammer 11. In einer in weiterer Folge beschriebenen Ausführungsvariante kann vorgesehen sein, dass der Fahrzeugschalldämpfer 1 in einer Durchströmrichtung 12 vom gasförmigen Medium, insbesondere von der Lade- bzw. Verbrennungsluft, durchströmt wird. In Bezug auf die Durchströmrichtung 12 kann vorgesehen sein, dass die erste Resonatorkammer 10 vor der zweiten Resonatorkammer 11 angeordnet ist. Die beiden Gehäuseteile 2, 3 bilden eine Außenhülle 13 des Fahrzeugschalldämpfers 1, wobei die beiden Resonatorkammern 10, 11 innerhalb dieser Außenhülle 13 durch ein Resonatorinnenelement 14 begrenzt sind.

Die erste Resonatorkammer 10 wird außenseitig vom ersten Gehäuseteil 2 begrenzt, wobei das erste Gehäuseteil 2 einen ersten Außenmantel 15 und eine erste Stirnwand 16 aufweist. Die erste Stirnwand 16 kann als flache Wand ausgeführt sein.

Präzise ausgedrückt wird die erste Resonatorkammer 10 in deren Außenbereich durch eine Innenmantelfläche 17 des ersten Außenmantels 15 und durch eine Stirninnenfläche 18 der ersten Stirnwand 16 begrenzt.

Die erste Stirnwand 16 weist eine Einströmöffnung 19 auf, durch welche das Medium, insbesondere die komprimierte Ansaugluft, in die erste Resonatorkammer 10 einströmen kann. Die erste Resonatorkammer 10 wird innenseitig partiell durch einen ersten innenliegenden Rohrabschnitt 20 des Resonatorinnenelementes 14, respektive durch eine Außenmantelfläche 21 des ersten innenliegenden Rohrabschnittes 20 und durch eine Kammertrennwand 22 des Resonatorinnenelementes 14 respektive eine erste Wandfläche 23 der Kammertrennwand 22 begrenzt.

Weiters kann vorgesehen sein, dass die Einströmöffnung 19 einen im Axialschnitt stufenförmig verjüngend ausgebildeten Ansatz 24 zur Aufnahme der Kupplungseinrichtung 6 aufweist. Hierbei kann der stufenförmig verjüngend ausgebildete Ansatz 24 so in die erste Resonatorkammer 10 einstehend bzw. hineinragend ausgebildet sein, dass dieser die erste Resonatorkammer 10 begrenzt. Insbesondere kann vorgesehen sein, dass eine außenliegende Mantelfläche 25 des stufenförmig verjüngend ausgebildeten Ansatzes 24 die erste Resonatorkammer 10 begrenzt.

Analog dazu kann vorgesehen sein, dass die zweite Resonatorkammer 11 in dessen Außenbereich durch das zweite Gehäuseteil 3 begrenzt wird. Das zweite Gehäuseteil 3 kann hierbei einen zweiten Außenmantel 26 mit einer zweiten Innenmantelfläche 27 aufweisen. Weiters kann vorgesehen sein, dass das zweite Gehäuseteil 3 eine zweite Stirnwand 28 umfasst, wobei die zweite Resonatorkammer 11 durch eine zweite Stirninnenfläche 29 der zweiten Stirnwand 28 begrenzt wird.

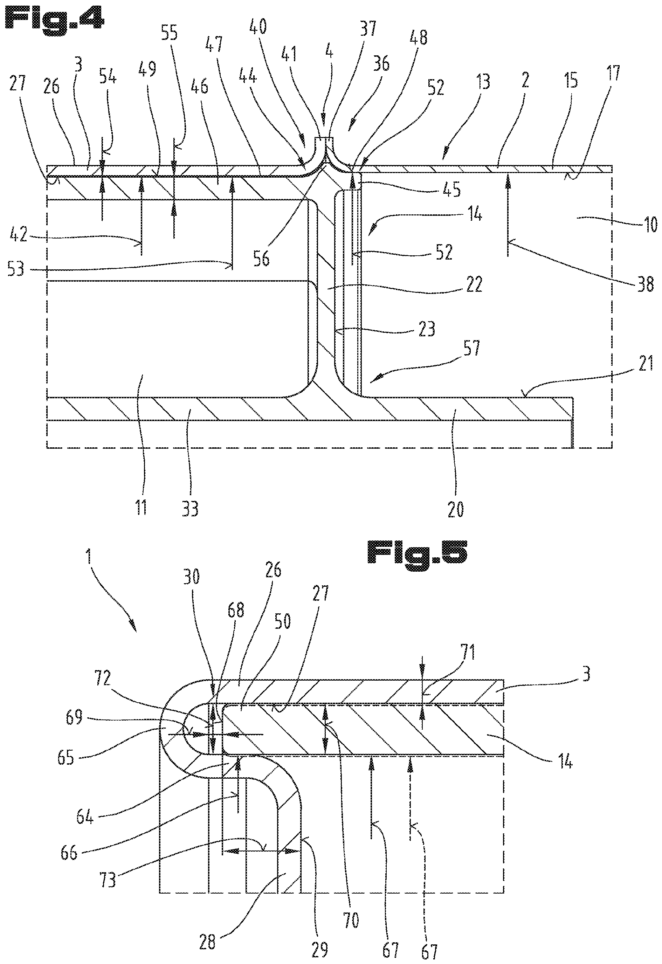

Weiters kann vorgesehen sein, dass an der zweiten Stirnwand 28 und/oder an der ersten Stirnwand 16 eine Haltenut 30 ausgebildet ist, welche zur Positionierung des Resonatorinnenelementes 14 in den Gehäuseteilen 2, 3 des Fahrzeugschalldämpfers 1 dient. Die Haltenut 30 bzw. das Zusammenwirken der Haltenut 30 mit dem Resonatorinnenelement 14 wird in weiterer Folge in Fig. 5 noch näher beschrieben.

Das zweite Gehäuseteil 3 weist an der dem Zentrum zugewandter Seite der zweiten Stirnwand 28 eine Ausströmöffnung 31 auf, durch welche das gasförmige Medium geführt werden kann. In diesem in Fig. 2 dargestellten Ausführungsbeispiel verläuft die zweite Stirnwand 28 radial vom zweiten Außenmantel 26 in Richtung Zentrum. Die zweite Stirnwand 28 ist daher in einem rechten Winkel zum zweiten Außenmantel 26 angeordnet. In weiteren Ausführungsbeispielen kann die zweite Stirnwand 28 jedoch andersartig ausgebildet sein, beispielsweise eine leichte Schräge aufweisen.

Weiters kann vorgesehen sein, dass an die Ausströmöffnung 31 ein Anschlussstutzen 32 gekoppelt ist, welcher dazu vorgesehen ist, einen Druckschlauch am Fahrzeugschalldämpfer 1 anzuschließen.

Der Anschlussstutzen 32 kann, wie in Fig. 2 ersichtlich, einteilig mit dem zweiten Gehäuseteil 3 ausgebildet sein. In einer Alternativvariante kann auch vorgesehen sein, dass der Anschlussstutzen 32 als eigenständiges Bauteil ausgeführt ist, welches beispielsweise durch eine Schweißverbindung mit dem zweiten Gehäuseteil 3 verbunden ist. Weiters kann vorgesehen sein, dass der Anschlussstutzen 32 nicht direkt an das zweite Gehäuseteil 3 anschließt, sondern dass noch weitere Gehäuseteile am Fahrzeugschalldämpfer 1 ausgebildet sind.

An der Innenseite wird die zweite Resonatorkammer 11 durch einen zweiten, innenliegenden Rohrabschnitt 33 des Resonatorinnenelementes 14, insbesondere durch eine Außenmantelfläche 34 des zweiten innenliegenden Rohrabschnittes 33 begrenzt. Weiters wird die zweite Resonatorkammer 11 durch die Kammertrennwand 22, insbesondere durch eine zweite Wandfläche 35 der Kammertrennwand 22 zur ersten Resonatorkammer 10 abgegrenzt.

In der Ausführungsvariante des Fahrzeugschalldämpfers 1 gemäß Fig. 2 umfasst der Fahrzeugschalldämpfer 1, welcher zwei Resonatorkammern 10, 11 aufweist, einen ersten Gehäuseteil 2, einen zweiten Gehäuseteil 3 und das Resonatorinnenelement 14.

Der erste Gehäuseteil 2 und der zweite Gehäuseteil 3 sind in einer vorteilhaften Ausführungsvariante als Tiefziehteile ausgebildet. Insbesondere kann vorgesehen sein, dass die beiden Gehäuseteile 2, 3 aus einem metallischen Werkstoff, etwa aus einem Stahlblech geformt bzw. tiefgezogen werden. Vorzugsweise wird hierbei ein Edelstahlblech verwendet.

Das Resonatorinnenelement 14 kann aus einem Kunststoffmaterial gebildet und insbesondere als Spritzgussteil ausgeführt sein.

Die einzelnen Bauteile des Fahrzeugschalldämpfers 1 sind so ausgebildet, dass das Resonatorinnenelement 14 in der Haltenut 30 des ersten Gehäuseteils 2 und/oder in der Haltenut 30 des zweiten Gehäuseteils 3 formschlüssig aufgenommen ist.

Der Fahrzeugschalldämpfer 1 kann im Verbindungsbereich 4 eine stoffschlüssige Verbindung aufweisen, indem der erste Gehäuseteil 2 und der zweite Gehäuseteil 3 in diesem Füge- bzw. Verbindungsbereich 4 durch eine Laser- oder Plasmaschweißverbindung miteinander verbunden sind.

Im folgenden Beschreibungsteil werden die Einzelteile, welche der Fahrzeugschalldämpfer 1 umfasst, hinsichtlich ihrer Ausgestaltung beschrieben. Es sei jedoch darauf hingewiesen, dass sich die Ausgestaltung dieser Einzelteile auf eine Ausführungsvariante des Fahrzeugschalldämpfers 1 bezieht. Es ist nicht zwingend erforderlich, dass für die erfindungsgemäße Ausbildung sämtliche hier beschriebenen Ausbildungsmerkmale der Einzelteile realisiert werden bzw. diese wie hier beschrieben ausgestaltet werden.

Der erste Gehäuseteil 2 umfasst in dessen Verbindungsbereich 4 zum zweiten Gehäuseteil 3 einen ersten Verbindungsabschnitt 36. Der erste Verbindungsabschnitt 36 weist an dessen freien Ende einen radial nach außen abstehenden Flansch 37 auf, mittels welchem der erste Gehäuseteil 2 mit dem zweiten Gehäuseteil 3 verbunden ist.

Die Verbindung zwischen erstem Gehäuseteil 2 und zweiten Gehäuseteil 3 wird vorzugsweise durch eine stoffschlüssige Verbindung, etwa einer Schweißverbindung, insbesondere einer Laser-, Plasma- oder Mikroplasma-Schweißverbindung, realisiert.

An den ersten Verbindungsabschnitt 36 schließt der erste Außenmantel 15 an. Der erste Außenmantel 15 weist an dessen Innenmantelfläche 17 eine Querschnittsabmessung 38 auf. Der erste Außenmantel 15 weist außerdem eine Axialerstreckung 39 auf.

Anschließend an den ersten Außenmantel 15 ist die erste Stirnwand 16 ausgebildet, welche die Einströmöffnung 19 und den im Axialschnitt stufenförmig verjüngend ausgebildeten Ansatz 24 zur Aufnahme der Kupplungseinrichtung 6 aufweist. Die erste Stirnwand 16 schließt in Richtung Zentrum verlaufend an den ersten Außenmantel 15 an.

Der zweite Gehäuseteil 3 weist einen zweiten Verbindungsabschnitt 40 auf, an welchen der zweite Außenmantel 26 anschließt. Insbesondere der Bereich um den Verbindungsabschnitt 40 des zweiten Gehäuseteils 3 ist analog zum ersten Verbindungsabschnitt 36 des ersten Gehäuseteils 2 ausgebildet. Um Wiederholungen zu vermeiden, wird auf eine detaillierte Beschreibung der einzelnen Flächen und Lagen zueinander verzichtet.

Auch an den zweiten Verbindungsabschnitt 40 schließt ein Flansch 41 an, welcher im verbauten Zustand vorzugsweise durch eine Schweißverbindung mit dem Flansch 37 des ersten Verbindungsabschnitts 36 verbunden ist. Der zweite Außenmantel 26 weißt an dessen Innenmantelfläche 27 eine Querschnittsabmessung 42 auf.

Die Querschnittsabmessung 42 des zweiten Außenmantels 26 kann aufgrund von unterschiedlichen Materialstärken der Gehäuseteile 2, 3 geringfügig kleiner sein, als die Querschnittsabmessung 38 des ersten Außenmantels 15. Der zweite Außenmantel 26 weist außerdem eine Axialerstreckung 43 auf.

Weiters kann vorgesehen sein, dass das Resonatorinnenelement 14 an einem äußeren Umfang 44 seiner Kammertrennwand 22 einen ersten außenliegenden Rohrabschnitt 45 und/oder einen zweiten außenliegenden Rohrabschnitt 46 aufweist, welche einander gegenüberliegend an die Kammertrennwand 22 anschließen.

Wie aus Fig. 2 gut ersichtlich, kann vorgesehen sein, dass der erste außenliegende Rohrabschnitt 45 und/oder der zweite außenliegende Rohrabschnitt 46 des Resonatorinnenelementes 14 derart ausgebildet und dimensioniert sind, dass zwischen diesen und dem ersten Außenmantel 15 und/oder dem zweiten Außenmantel 26 ein Ringraum 47 ausgebildet ist. Insbesondere kann sich der Ringraum 47 zwischen der Innenmantelfläche 17 des ersten Außenmantels 15 und einer Außenmantelfläche 48 des ersten außenliegenden Rohrabschnittes 45 erstrecken. Weiters kann sich der Ringraum 47 zwischen der Innenmantelfläche 27 des ersten Außenmantels 15 und einer Außenmantelfläche 49 des zweiten außenliegenden Rohrabschnittes 46 erstrecken.

Weiters ist vorgesehen, dass am Resonatorinnenelement 14 ein Halteabschnitt 50 ausgebildet ist, welcher mit der Haltenut 30 zusammenwirkt und durch welchen das Resonatorinnenelement 14 in den Gehäuseteilen 2, 3 gehalten wird.

Der Halteabschnitt 50 kann direkt an den ersten außenliegenden Rohrabschnitt 45 und/oder an den zweiten außenliegenden Rohrabschnitt 46 anschließen. Alternativ dazu ist es auch denkbar, dass der Halteabschnitt 50 direkt an die Kammertrennwand 22 anschließt und dass kein erster außenliegender Rohrabschnitt 45 und/oder zweiter außenliegender Rohrabschnitt 46 ausgebildet ist.

Der Halteabschnitt 50 kann als umlaufender Abschnitt gebildet sein und eine rohrähnliche Struktur aufweisen. In einer Alternativvariante ist es auch denkbar, dass der Halteabschnitt 50 durch einzelne auf den Umfang gleichmäßig verteilte Segmente ausgebildet ist. Ein Halteabschnitt 50, welcher in Form von einzelnen Segmenten ausgebildet ist, bringt den Vorteil mit sich, dass die einzelnen Segmente biegbar sind und somit an ihrem von der Kammertrennwand 22 abgewandten Ende elastisch radial verschiebbar sind. Dadurch kann eine Klemmung realisiert werden bei welcher der Halteabschnitt 50 in die Haltenut 30 eingeschoben ist, wobei im verbauten Zustand der Halteabschnitt 50 eine radial zum Zentrum wirkende Kraft auf die Haltenut 30 ausübt. Somit kann eine kraftschlüssige Verbindung zwischen Halteabschnitt 50 und Haltenut 30 gebildet sein.

Ein weiterer Vorteil eines segmentierten Halteabschnittes 50 liegt darin, dass Material eingespart werden kann. Somit kann die Masse des Resonatorinnenelementes 14 verringert werden.

Die einzelnen Segmente des Halteabschnittes 50 können verschieden ausgebildet sein. Beispielsweise ist es denkbar, dass über zehn dieser Segmente am Umfang verteilt angeordnet sind, wobei sich die einzelnen Segmente nur über einen kleinen Winkelbereich erstrecken. In einer anderen Ausführungsvariante ist es auch denkbar, dass nur zwei Segmente ausgebildet sind, wobei sich beide Segmente über einen Winkel von annähernd 180° erstrecken können, sodass zwischen diesen beiden Halbschalen nur ein kleiner Spalt ausgebildet ist.

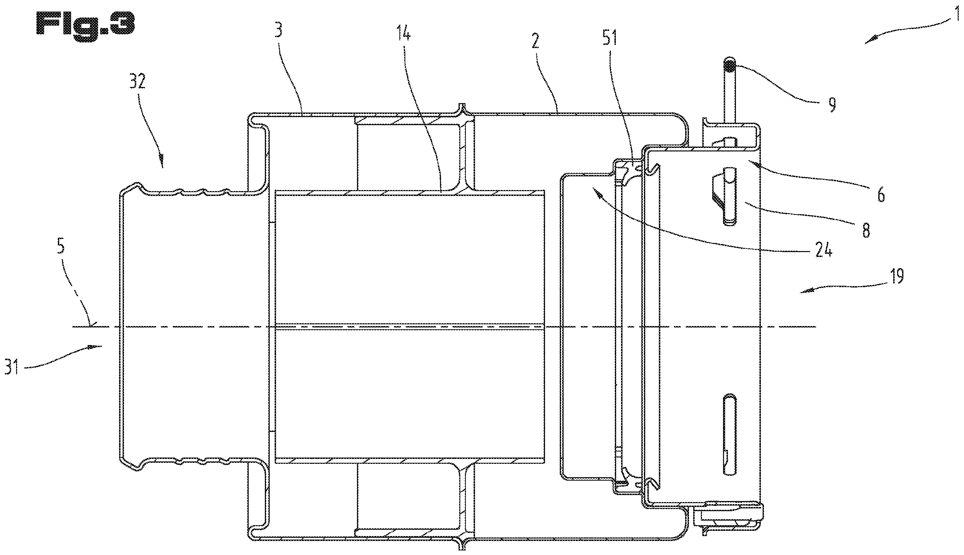

In der Fig. 3 ist eine weitere Schnittansicht des zusammengebauten Fahrzeugschalldämpfers 1 gezeigt, wobei wiederum für gleiche Teile gleiche Bezugszeichen bzw. Bauteilbezeichnungen wie in den vorangegangenen Figuren 1 und 2 verwendet werden. Um unnötige Wiederholungen zu vermeiden, wird auf die detaillierte Beschreibung in den vorangegangenen Figuren 1 und 2 hingewiesen bzw. Bezug genommen.

Die Schnittlinie der Schnittdarstellung in Fig. 3 ist um 90° zu der Schnittlinie der Schnittdarstellung aus Fig. 2 gedreht. Der Halteabschnitt 50 wird somit nicht direkt durchgeschnitten.

In Fig. 3 ist die Einbausituation des Kupplungskörpers 8 ersichtlich, wobei das in den Kupplungskörper 8 eingesetzte Befestigungselement 9 ebenfalls dargestellt ist. Wie in Fig. 3 gut ersichtlich, kann vorgesehen sein, dass ein Dichtungselement 51 ausgebildet ist, welches zur Abdichtung zwischen Fahrzeugschalldämpfer 1 und einer damit zu verbindenden Leitung oder eines damit zu verbindenden Turbolader 7 dient. Das Dichtungselement 51 kann im stufenförmig verjüngend ausgebildeten Ansatz 24 aufgenommen sein, wobei vorgesehen sein kann, dass das Dichtungselement 51 durch den Kupplungskörper 8 in seiner Position gesichert wird.

Fig. 4 zeigt eine Detailansicht des Verbindungsbereiches 4 der beiden Gehäuseteile 2, 3.

Fig. 5 zeigt eine Detailansicht des Halteabschnittes 50.

Die Folgende Beschreibung beruht auf einer Zusammenschau der Figuren 2, 4 und 5.

Der Ringraum 47 kann insbesondere dadurch gebildet, sein dass ein Außendurchmesser 52 des ersten außenliegenden Rohrabschnittes 45 und/oder ein Außendurchmesser 53 des zweiten außenliegenden Rohrabschnittes 46 kleiner als die Querschnittsabmessung 38 der Innenmantelfläche 17 des ersten Außenmantels 15 und/oder die Querschnittsabmessung 42 der Innenmantelfläche 27 des zweiten Außenmantels 26 gewählt ist. Durch diese Differenz der Querschnittsabmessungen ergibt sich eine Spaltweite 54, welche die Größe des Ringraumes 47 definiert.

Der Ringraum 47 kann unter anderem den Zweck erfüllen, dass die beiden Resonatorkammern 10, 11 strömungsverbunden sind. Somit kann bei Druckanstieg in der ersten Resonatorkammer 10 die davon ausgehende Druckwelle im Ringraum 47 gedämpft werden. Insbesondere kann durch den Ringraum 47 im Fahrzeugschalldämpfer 1 eine zusätzliche Frequenz gedämpft werden, wodurch die Dämfpeigenschaften des Fahrzeugschalldämpfers 1 verbessert werden können.

Das Dämpfungsverhalten des Fahrzeugschalldämpfers 1 kann außerdem durch die Wandstärke 55 der außenliegenden Rohrabschnitte 45, 46 beeinflusst werden.

Das Resonatorinnenelement 14 weist ein Sicherungselement 56 auf, welches zur Sicherung des Resonatorinnenelementes 14 innerhalb der beiden Gehäuseteile 2, 3 dient. Insbesondere kann vorgesehen sein, dass das Resonatorinnenelement 14 durch die Klemmung zwischen Halteabschnitt 50 und Haltenut 30 in seiner Position gehalten wird und dass das Sicherungselement 56 nicht mit einem der beiden Gehäuseteile 2, 3 in eingriff steht. Wenn die Klemmung zwischen Halteabschnitt 50 und Haltenut 30 versagen sollte, dient das Sicherungselement 56 dazu, das Resonatorinnenelement 14 zumindest annähernd in seiner Position zu halten.

In einem ersten Ausführungsbeispiel kann vorgesehen sein, dass das Sicherungselement 56 als umlaufender Wulst ausgebildet ist. Wie in Fig. 4 ersichtlich, ist es vorteilhaft, wenn das Sicherungselement 56 in dessen Form an die Form der beiden Gehäuseteile 2, 3 angepasst ist.

In einer weiteren Ausführungsform kann vorgesehen sein, dass das Sicherungselement 56 in Form eines Sicherungssegmentes oder Sicherungszapfens ausgeführt ist und daher nicht umlaufend ist. Hierbei kann vorgesehen sein, dass mehrere dieser Sicherungszapfen am Umfang verteilt angeordnet sind. Insbesondere kann vorgesehen sein, dass drei Sicherungszapfen gleichmäßig über den Umfang des Resonatorinnenelementes 14 verteilt angeordnet, das heißt um 120° zueinander versetzt sind.

Darüber hinaus, kann vorgesehen sein, dass der oder die Sicherungszapfen derart ausgebildet ist, dass er im zusammengefügten Zustand der beiden Gehäuseteile 2, 3 zwischen erstem Verbindungsabschnitt 36 und zweitem Verbindungsabschnitt 40 aufgenommen werden kann. Das Resonatorinnenelement 14 kann somit durch Fügen der beiden Gehäuseteile 2, 3 zueinander im Fahrzeugschalldämpfer 1 eingesetzt werden.

Der Sicherungszapfen kann beispielsweise einteilig mit dem Resonatorinnenelement 14 ausgeführt sein. Es ist jedoch auch möglich, dass der Sicherungszapfen als Anguss nachträglich auf das Resonatorinnenelement 14 aufgebracht wird.

Anschließend an die außenliegenden Rohrabschnitte 45, 46 des Resonatorinnenelementes 14 ist die Kammertrennwand 22 ausgebildet. Die Kammertrennwand 22 erstreckt sich in Richtung Zentrum des Fahrzeugschalldämpfers 1. Am inneren Umfang 57 der sich in radialer Richtung erstreckenden Kammertrennwand 22 ist an einer ersten Seite der erste innenliegende Rohrabschnitt 20 ausbildet. Der erste innenliegende Rohrabschnitt 20 ist hierbei ausgehend von der Kammertrennwand 22 in Richtung Einströmöffnung 19 gezogen. An der gegenüberliegenden Seite der Kammertrennwand 22 ist der zweite innenliegende Rohrabschnitt 33 ausgebildet, welcher ausgehend von der Kammertrennwand 22 in Richtung Ausströmöffnung 31 verläuft bzw. gezogen ist.

Durch den ersten innenliegenden Rohrabschnitt 20 und das erste Gehäuseteil 2 wird ein erster Kammerspalt 58 gebildet, durch welchen die erste Resonatorkammer 10 mit einer freien Durchströmöffnung 59 derart verbunden ist, dass ein Gasaustausch zwischen diesen möglich ist. Analog dazu wird durch den zweiten innenliegenden Rohrabschnitt 33 und das zweite Gehäuseteil 3 ein zweiter Kammerspalt 60 gebildet, durch welchen die zweite Resonatorkammer 11 mit der freien Durchströmöffnung 59 verbunden ist.

Der erste innenliegende Rohrabschnitt 20 und der zweite innenliegende Rohrabschnitt 33 weisen vorzugsweise einen gleich großen gemeinsamen Innendurchmesser 61 auf. Eine Axialerstreckung 62 des ersten innenliegenden Rohrabschnittes 20 und eine Axialerstreckung 63 des zweiten innenliegenden Rohrabschnittes 33 werden in Abhängigkeit von der Axialerstreckung 39 des ersten Außenmantels 15 bzw. von der Axialerstreckung 43 des zweiten Außenmantels 26 bemessen. Durch Variation der Axialerstreckung 62 des ersten innenliegenden Rohrabschnittes 20 bzw. der Axialerstreckung 63 des zweiten innenliegenden Rohrabschnittes 33 können die Kammerspalte 58, 60 festgelegt werden bzw. kann dadurch das Resonatorverhalten beeinflusst werden.

Wie aus Fig. 5 ersichtlich, kann vorgesehen sein, dass die Haltenut 30 dadurch gebildet ist, dass im Anschluss an den zweiten Außenmantel 26 ein Widerlagerabschnitt 64 ausgebildet ist, welcher Widerlagerabschnitt 64 parallel zum Außenmantel 26 verläuft und innerhalb des zweiten Außenmantels 26 angeordnet ist. Der Widerlagerabschnitt 64 ist um 180° gegenüber dem zweiten Außenmantel 26 umgeschlagen, wobei ein Biegeabschnitt 65 ausgebildet ist, welcher den Widerlagerabschnitt 64 mit dem zweiten Außenmantel 26 verbindet.

Anschließend an den Widerlagerabschnitt 64 ist im Winkel von 90° die zweite Stirnwand 28 ausgebildet.

Analog zu dieser Ausführung der Haltenut 30 im zweiten Gehäuseteil 3 kann die Haltenut 30 auch im ersten Gehäuseteil 2 angeordnet sein.

Wie in Fig. 5 besonders gut ersichtlich, kann vorgesehen sein, dass die Haltenut 30 einen Innendurchmesser 66 aufweist, welcher insbesondere durch den Widerlagerabschnitt 64 gebildet ist. Zur Veranschaulichung ist in Fig. 5 der Halteabschnitt 50 mit strichlierter Linie in seinem nicht verbauten und daher nicht verformten Zustand dargestellt. Dabei ist gut ersichtlich, dass der Halteabschnitt 50 einen Innendurchmesser 67 aufweisen kann, welcher geringfügig kleiner ist, als der Innendurchmesser 66 der Haltenut 30.

Erst durch das Fügen des Resonatorinnenelementes 14 mit dem zweiten Gehäuseteil 3 wird der Halteabschnitt 50 elastisch verformt, sodass der Halteabschnitt 50 auf den Widerlagerabschnitt 64 der Haltenut 30 drückt und somit eine Reibkraft erzeugt wird, welche das Resonatorinnenelement 14 mittels dem Halteabschnitt 50 im zweiten Gehäuseteil 3 fixiert.

Wie aus Fig. 5 weiters ersichtlich, kann vorgesehen sein, dass eine Stirnwand 68 des Halteabschnittes 50 um einen Abstand 69 vom Biegeabschnitt 65 beabstandet ist. Dadurch kann erreicht werden, dass der Halteabschnitt 50 nicht axial durch Formschluss im zweiten Gehäuseteil 3 geklemmt ist, sondern dass die Klemmung des Resonatorinnenelementes 14 im zweiten Gehäuseteil 3 nur durch Kraft bzw. Reibschluss erfolgt. Der Abstand 69 kann zwischen 0,1mm und 5mm, insbesondere zwischen 0,15mm und 2mm, bevorzugt zwischen 0,2mm und 1mm betragen.

Um eine gute Funktionalität des Fahrzeugschalldämpfers 1 erreichen zu können, kann vorgesehen sein, dass der Halteabschnitt 50 eine Wandstärke 70 zwischen 0,5mm und 10mm, insbesondere zwischen 0,9mm und 5mm, bevorzugt zwischen 1mm und 2mm aufweist.

Weiters kann vorgesehen sein, dass eine Wandstärke 71 des zweiten Gehäuseteils 3 zwischen 0,3mm und 5mm, insbesondere zwischen 0,4mm und 2mm, bevorzugt zwischen 0,5mm und 0,7mm beträgt.

Weiters kann vorgesehen sein, dass eine Spaltweite 72 der Haltenut 30 zwischen 0,5mm und 10mm, insbesondere zwischen 0,9mm und 5mm, bevorzugt zwischen 1mm und 2mm beträgt. In einer ersten Ausführungsvariante kann vorgesehen sein, dass die Wandstärke 70 des Halteabschnittes 50 geringfügig kleiner ist als die Spaltweite 72 der Haltenut 30. Dadurch kann erreicht werden dass das Resonatorinnenlement 14 nur aufgrund der Elastizität des Halteabschnittes 50 und aufgrund der dadurch aufgebrachten Presswirkung in einem der Gehäuseteile hält.

In einer Alternativvariante kann vorgesehen sein, dass die Wandstärke 70 des Halteabschnittes 50 gleich groß oder geringfügig größer ist als die Spaltweite 72 der Haltenut 30. Dadruch kann eine zusätzliche Klemmung zwischen Halteabschnitt 50 und Haltenut 30 realisiert werden.

Weiters kann vorgesehen sein, dass ein Überstand 73 des Halteabschnittes 50 gegenüber der zweiten Stirninnenfläche 29 der zweiten Stirnwand 28 zwischen 0,5mm und 10mm, insbesondere zwischen 1mm und 5mm, bevorzugt zwischen 1,5mm und 2,5mm beträgt.

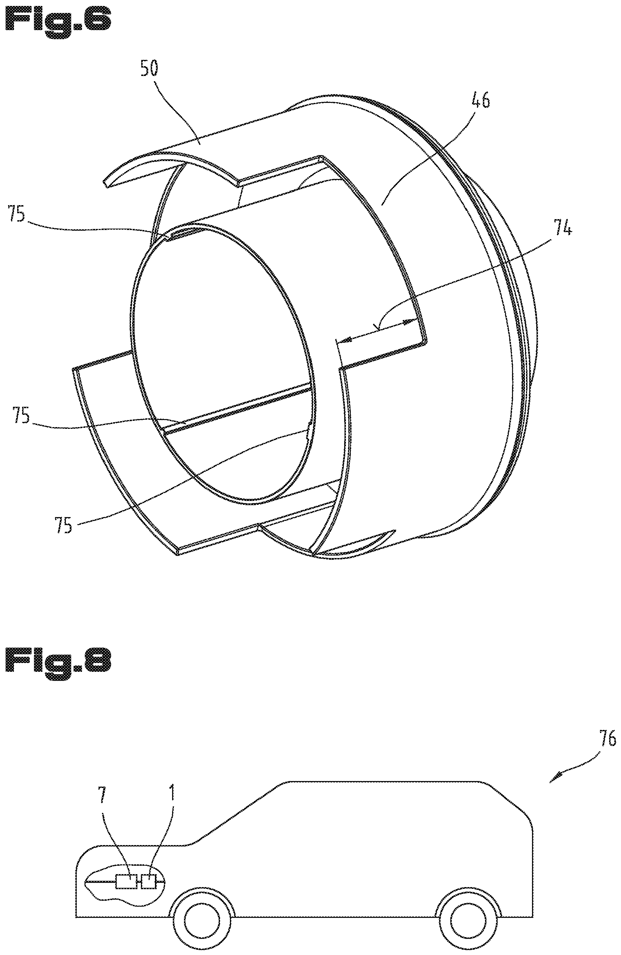

Fig. 6 zeigt eine perspektivische Ansicht des Resonatorinnenelementes 14, wobei wiederum für gleiche Teile gleiche Bezugszeichen bzw. Bauteilbezeichnungen wie in den vorangegangenen Figuren 1 bis 5 verwendet werden. Um unnötige Wiederholungen zu vermeiden, wird auf die detaillierte Beschreibung in den vorangegangenen Figuren 1 bis 5 hingewiesen bzw. Bezug genommen.

In einer bevorzugten Ausführungsvariante, wie sie in Fig. 6 dargestellt ist, kann vorgesehen sein, dass im Bereich des Halteabschnittes 50 drei Segmente ausgebildet sind, welche gleichmäßig über den Umfang verteilt angeordnet sind. Die einzelnen Segmente können sich dabei über einen Winkel zwischen 10° und 115°, insbesondere zwischen 30° und 90°, bevorzugt zwischen 55° und 65° erstrecken. Die zwischen den einzelnen Segmenten gebildeten Freiräume variieren je nach Erstreckung der einzelnen Segmente.

Insbesondere kann der Halteabschnitt 50 gegenüber dem zweiten außenliegenden Rohrabschnitt 46 um einen Abstand 74 vorstehend ausgebildet sein. Der Abstand 74 kann zwischen 5mm und 50mm, insbesondere zwischen 7mm und 20mm, bevorzugt zwischen 10mm und 15mm betragen.

Wie aus Fig. 6 weiters ersichtlich kann vorgesehen sein, dass an den innenliegenden Rohrabschnitten 20, 33 eine oder mehrere Rippen 75 angeordnet sind, welche in deren Winkel zueinander und/oder in deren Breite unterschiedlich ausgeführt sein können, um eine Lagerichtige Positionierung des Resonatorinnenelementes 14 in den Gehäuseteilen 2, 3 ermöglichen zu können.

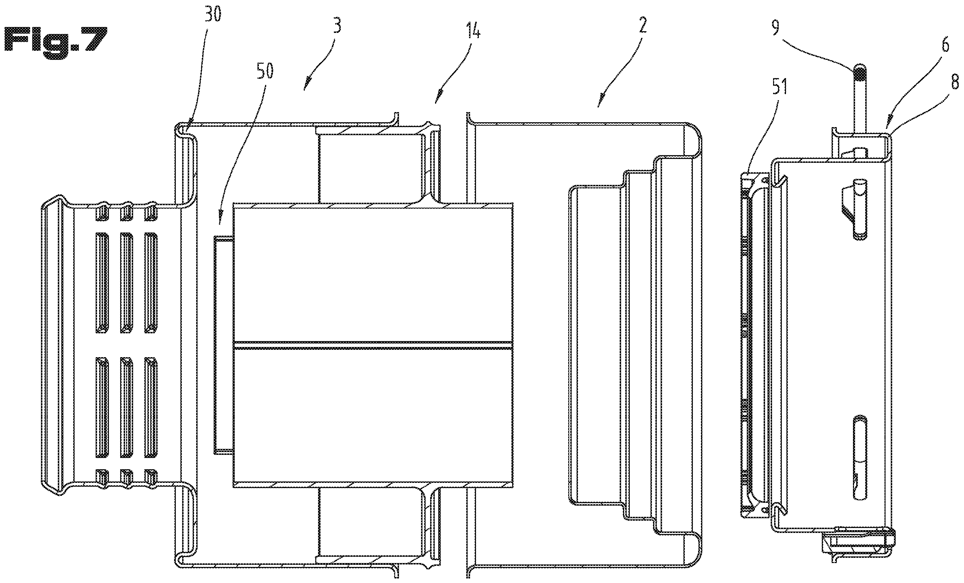

Fig. 7 zeigt eine Explosionsdarstellung des Fahrzeugschalldämpfers 1, wobei wiederum für gleiche Teile gleiche Bezugszeichen bzw. Bauteilbezeichnungen wie in den vorangegangenen Figuren 1 bis 6 verwendet werden. Um unnötige Wiederholungen zu vermeiden, wird auf die detaillierte Beschreibung in den vorangegangenen Figuren 1 bis 6 hingewiesen bzw. Bezug genommen. Aus der Beschreibung in Fig. 7 ist gut ersichtlich, wie der Fahrzeugschalldämpfer 1 gefertigt bzw. zusammengebaut werden kann.

Am Beginn des Produktionsprozesses werden zumindest der erste Gehäuseteil 2 sowie der Kupplungskörper 8 tiefgezogen, sodass sie ihre charakteristische Form erhalten.

In einem weiteren Verfahrensschritt wird das erste Gehäuseteil 2 von einer Vorrichtung bzw. einem Manipulationsroboter gehalten. Anschließend kann das Dichtungselement 51 axial in das erste Gehäuseteil 2, insbesondere in den stufenförmig verjüngend ausgebildeten Ansatz 24 eingesetzt werden.

Ist nun das Dichtungselement 51 relativ zum ersten Gehäuseteil 2 platziert, so kann in einem weiteren Verfahrensschritt der Kupplungskörper 8 in den stufenförmig verjüngend ausgebildeten Ansatz 24 eingeschoben werden. Der Kupplungskörper 8 ist hierbei so auszurichten, dass die Stirnwand des Kupplungskörpers 8 zum ersten Gehäuseteil 2 hin zeigt.

In einem weiteren Verfahrensschritt werden der Kupplungskörper 8 sowie der erste Gehäuseteil 2 durch eine Schweißverbindung, insbesondere eine Laser- oder Plasmaschweißverbindung, miteinander verbunden. Eine Laser- oder Plasmaschweißverbindung haben den Vorteil, dass der Wärmeeintrag nur sehr gering und lokal begrenzt ist. Dadurch wird das Dichtungselement 27 während des Schweißvorganges nicht beschädigt.

In einem weiteren Verfahrensschritt kann das Resonatorinnenelement 14 in das zweite Gehäuseteil 3, welches ebenfalls tiefgezogen sein kann eingesetzt werden, wobei der Halteabschnitt 50 in die Haltenut 30 eingeschoben wird.

In einem weiteren Verfahrensschritt kann der erste Gehäuseteil 2 mit dem zweiten Gehäuseteil 3 mittels einer Schweißverbindung verbunden werden.

Fig. 8 zeigt ein Fahrzeug 76 mit dem Turbolader 7 und einem auf der Druckseite des Turboladers 7 angeschlossenen, erfindungsgemäßen Fahrzeugschalldämpfer 1.

Als Turbolader 7 ist dabei eine Verdichtungsvorrichtung für Verbrennungsluft der Verbrennungskraftmaschine des Fahrzeuges 76 zu verstehen. Anstelle eines Turboladers 7 kann auch eine Kompressoranordnung oder eine sonstige den Ladedruck der Verbrennungsluft erhöhende Vorrichtung eingesetzt werden. Der erfindungsgemäße Fahrzeugschalldämpfer 1 reduziert bzw. minimiert dabei während des Betriebs der Verbrennungskraftmaschine auftretende Strömungs- bzw. Pfeif- oder Vibrationsgeräusche zumindest innerhalb eines gewissen Frequenzbereiches. Mit dem angegebenen Fahrzeugschalldämpfer 1 kann somit das erzielbare Komfortniveau von Kraftfahrzeugen, deren Verbrennungskraftmaschine ladedruckseitig mit dem angegebenen Fahrzeugschalldämpfer 1 versehen ist, gesteigert werden.

Die Ausführungsbeispiele zeigen mögliche Ausführungsvarianten des Fahrzeugschalldämpfers 1, wobei an dieser Stelle bemerkt sei, dass die Erfindung durch die Ansprüche definiert ist.

Der Ordnung halber sei abschließend darauf hingewiesen, dass zum besseren Verständnis des Aufbaus des Fahrzeugschalldämpfers 1 dieser bzw. dessen Bestandteile maßstäblich dargestellt wurden.

**Bezugszeichenaufstellung**

| | | | |
|---|---|---|---|
| 1 | Fahrzeugschalldämpfer | 30 | Haltenut |
| 2 | erster Gehäuseteil | 31 | Ausströmöffnung |
| 3 | zweiter Gehäuseteil | 32 | Anschlussstutzen |
| 4 | Verbindungsbereich | 33 | zweiter innenliegender Rohrabschnitt |
| 5 | Mittelachse | 34 | Außenmantelfläche |
| 6 | Kupplungseinrichtung | 35 | zweite Wandfläche |
| 7 | Turbolader | 36 | erster Verbindungsabschnitt |
| 8 | Kupplungskörper | 37 | Flansch erster Verbindungsabschnitt |
| 9 | Befestigungselement | 38 | Querschnittsabmessung erster Außenmantel |
| 10 | erste Resonatorkammer | 39 | Axialerstreckung erster Außenmantel |
| 11 | zweite Resonatorkammer | 40 | zweiter Verbindungsabschnitt |
| 12 | Durchströmrichtung | 41 | Flansch zweiter Verbindungsabschnitt |
| 13 | Außenhülle | 42 | Querschnittsabmessung zweiter Außenmantel |
| 14 | Resonatorinnenelement | 43 | Axialerstreckung zweiter Außenmantel |
| 15 | erster Außenmantel | 44 | äußerer Umfang Resonatorinnenelement |
| 16 | erste Stirnwand | 45 | erster außenliegender Rohrabschnitt |
| 17 | erste Innenmantelfläche | 46 | zweiter außenliegender Rohrabschnitt |
| 18 | Stirninnenfläche | 47 | Ringraum |
| 19 | Einströmöffnung | 48 | Außenmantelfläche erster außenliegender Rohrabschnitt |
| 20 | erster innenliegender Rohrabschnitt | | |
| 21 | Außenmantelfläche | | |
| 22 | Kammertrennwand | | |
| 23 | erste Wandfläche | | |
| 24 | Ansatz | | |
| 25 | außenliegende Mantelfläche | | |
| 26 | zweiter Außenmantel | | |
| 27 | zweite Innenmantelfläche | | |
| 28 | zweite Stirnwand | | |
| 29 | zweite Stirninnenfläche | | |
| 49 | Außenmantelfläche zweiter außenliegender Rohrabschnitt | 76 | Fahrzeug |
| 50 | Halteabschnitt | | |
| 51 | Dichtungselement | | |
| 52 | Außendurchmesser erster Rohrabschnitt | | |
| 53 | Außendurchmesser zweiter Rohrabschnitt | | |
| 54 | Spaltweite | | |
| 55 | Wandstärke außenliegender Rohrabschnitt | | |
| 56 | Sicherungselement | | |
| 57 | innerer Umfang | | |
| 58 | erster Kammerspalt | | |
| 59 | freie Durchströmöffnung | | |
| 60 | zweiter Kammerspalt | | |
| 61 | Innendurchmesser Rohrabschnitte | | |
| 62 | Axialerstreckung erster innenliegender Rohrabschnitt | | |
| 63 | Axialerstreckung zweiter innenliegender Rohrabschnitt | | |
| 64 | Widerlagerabschnitt | | |
| 65 | Biegeabschnitt | | |
| 66 | Innendurchmesser Haltenut | | |
| 67 | Innendurchmesser Halteabschnitt | | |
| 68 | Stirnwand Halteabschnitt | | |
| 69 | Abstand | | |
| 70 | Wandstärke Halteabschnitt | | |
| 71 | Wandstärke erster Gehäuseteil | | |
| 72 | Spaltweite Haltenut | | |
| 73 | Überstand Halteabschnitt | | |
| 74 | Abstand Halteabschnitt | | |
| 75 | Rippe | | |

## Patentansprüche

1. Fahrzeugschalldämpfer (1) für eine Ladeluftleitung eines Verbrennungsmotors mit Turbolader (7), umfassend:
zumindest ein erstes Gehäuseteil (2) mit einem ersten Außenmantel (15), welches eine erste Stirnwand (16) umfasst und ein zweites Gehäuseteil (3) mit einem zweiten Außenmantel (26), welches eine zweite Stirnwand (28) umfasst, wobei die Gehäuseteile (2, 3) in einem Verbindungsbereich (4) miteinander gekoppelt sind und eine Außenhülle (13) des Fahrzeugschalldämpfers (1) bilden;
ein Resonatorinnenelement (14), welches in zumindest einem der Gehäuseteile (2, 3) gehaltert ist und zumindest eine Kammertrennwand (22), sowie an einen inneren Umfang (57) der Kammertrennwand (22) anschließend zumindest einen ersten innenliegenden Rohrabschnitt (20) aufweist, wobei durch die beiden Gehäuseteile (2, 3) und das Resonatorinnenelement (14) zumindest eine erste (10) und eine zweite Resonatorkammer (11) ausgebildet sind,
wobei das Resonatorinnenelement (14) im Bereich eines äußeren Umfanges (44) des Resonatorinnenelementes (14) zumindest einen ersten außenliegenden Halteabschnitt (50) aufweist, und dass in der ersten Stirnwand (16) und/oder in der zweiten Stirnwand (28) eine Haltenut (30) ausgebildet ist, in welcher der Halteabschnitt (50) aufgenommen ist, **dadurch gekennzeichnet, dass** ein Sicherungselement (56) im Bereich der Kammertrennwand (22) außenliegend am Resonatorinnenelement (14) angeordnet ist, wobei das Sicherungselement (56) zwischen dem ersten Gehäuseteil (2) und dem zweiten Gehäuseteil (3) aufgenommen ist.

2. Fahrzeugschalldämpfer nach Anspruch 1, **dadurch gekennzeichnet, dass** der Halteabschnitt (50) als Rohrabschnitt ausgebildet ist welcher koaxial zum ersten innenliegenden Rohrabschnitt (20) des Resonatorinnenelementes (14) angeordnet ist.

3. Fahrzeugschalldämpfer nach Anspruch 1, **dadurch gekennzeichnet, dass** der Halteabschnitt (50) als Rohrsegment ausgebildet ist.

4. Fahrzeugschalldämpfer nach einem der vorhergehenden Ansprüche, **dadurch gekennzeichnet, dass** das erste Gehäuseteil (2) und das zweite Gehäuseteil (3) aus einem metallischen Werkstoff, insbesondere als Blechumformteil ausgebildet sind.

5. Fahrzeugschalldämpfer nach einem der vorhergehenden Ansprüche, **dadurch gekennzeichnet, dass** das Resonatorinnenelement (14) aus einem Kunststoffmaterial ausgebildet ist.

6. Fahrzeugschalldämpfer nach einem der vorhergehenden Ansprüche, **dadurch gekennzeichnet, dass** ein Ringraum (47) zwischen dem Halteabschnitt (50) und dem ersten Außenmantel (15) und/oder dem zweiten Außenmantel (26) ausgebildet ist.

7. Fahrzeugschalldämpfer nach einem der vorhergehenden Ansprüche, **dadurch gekennzeichnet, dass** am Resonatorinnenelement (14) gegenüberliegend dem ersten innenliegenden Rohrabschnitt (20) ein zweiter innenliegender Rohrabschnitt (33) an die Kammertrennwand (22) anschließt.

8. Fahrzeugschalldämpfer nach einem der vorhergehenden Ansprüche, **dadurch gekennzeichnet, dass** ein Innendurchmesser (67) des Halteabschnittes (50) kleiner ist als ein Innendurchmesser (66) der Haltenut (30), wobei dadurch im zusammengebauten Zustand der Halteabschnitt (50) elastisch verformt ist und eine kraftschlüssige Verbindung zwischen Halteabschnitt (50) und Haltenut (30) ausgebildet ist.

9. Fahrzeugschalldämpfer nach einem der vorhergehenden Ansprüche, **dadurch gekennzeichnet, dass** das Sicherungselement (56) als umlaufender Wulst ausgebildet ist.

10. Fahrzeugschalldämpfer nach einem der Ansprüche 1 bis 8, **dadurch gekennzeichnet, dass** das Sicherungselement (56) in Form von einzelnen Positionierzapfen ausgebildet ist.

11. Fahrzeugschalldämpfer nach einem der vorhergehenden Ansprüche, **dadurch gekennzeichnet, dass** der Halteabschnitt (50) eine Wandstärke (70) zwischen 0,3mm und 5mm, insbesondere zwischen 0,4mm und 2mm, bevorzugt zwischen 0,5mm und 0,7mm aufweist.

12. Fahrzeugschalldämpfer nach einem der vorhergehenden Ansprüche, **dadurch gekennzeichnet, dass** der Halteabschnitt (50) um einen Abstand (74) zwischen 5mm und 50mm, insbesondere zwischen 7mm und 20mm, bevorzugt zwischen 10mm und 15mm gegenüber dem ersten außenliegenden Rohrabschnitt (45) oder gegenüber dem zweiten außenliegenden Rohrabschnitt (46) vorstehend ausgebildet ist.

13. Fahrzeugschalldämpfer nach einem der vorhergehenden Ansprüche, **dadurch gekennzeichnet, dass** eine Wandstärke (70) des Halteabschnittes (50) geringfügig größer ist als die Spaltweite (72) der Haltenut (30).

## Claims

1. A vehicle silencer (1) for a charge air line of an internal combustion engine with turbocharger (7), comprising:
at least one first housing part (2) with a first outer casing (15), which comprises a first end wall (16), and a second housing part (3) with a second outer casing (26), which comprises a second end wall (28), wherein the housing parts (2, 3) are coupled to one another in a connecting area (4) and form an outer shell (13) of the vehicle silencer (1);
an inner resonator element (14), which is mounted in at least one of the housing parts (2, 3) and comprises at least one chamber dividing wall (22), as well as at least one first inner pipe section (20) that is connected to an inner periphery (57) of the chamber dividing wall (22), wherein at least a first (10) and a second resonator chamber (11) are formed by the two housing parts (2, 3) and the inner resonator element (14),
wherein the inner resonator element (14) comprises at least one first outer retaining segment (50) in the region of an outer periphery (44) of the inner resonator element (14), and wherein a retaining groove (30), in which the retaining segment (50) is accommodated, is formed in the first end wall (16) and/or in the second end wall (28), **characterized in that** a securing element (56) is arranged on the outside of the inner resonator element (14) in the region of the chamber dividing wall (22), wherein the securing element (56) is accommodated between the first housing part (2) and the second housing part (3).

2. The vehicle silencer according to claim 1, **characterized in that** the retaining segment (50) is realized in the form of a pipe section, which is arranged coaxial to the first inner pipe section (20) of the inner resonator element (14).

3. The vehicle silencer according to claim 1, **characterized in that** the retaining segment (50) is realized in the form of a pipe segment.

4. The vehicle silencer according to one of the preceding claims, **characterized in that** the first housing part (2) and the second housing part (3) are made of a metallic material, particularly as a formed sheet metal part.

5. The vehicle silencer according to one of the preceding claims, **characterized in that** the inner resonator element (14) is made of a plastic material.

6. The vehicle silencer according to one of the preceding claims, **characterized in that** an annular chamber (47) is formed between the retaining segment (50) and the first outer casing (15) and/or the second outer casing (26).

7. The vehicle silencer according to one of the preceding claims, **characterized in that** a second inner pipe section (33) is connected to the chamber dividing wall (22) on the inner resonator element (14) opposite of the first inner pipe section (20).

8. The vehicle silencer according to one of the preceding claims, **characterized in that** an inside diameter (67) of the retaining segment (50) is smaller than an inside diameter (66) of the retaining groove (30), wherein the retaining segment (50) is thereby elastically deformed in the assembled state and a frictional connection is produced between the retaining segment (50) and retaining groove (30).

9. The vehicle silencer according to one of the preceding claims, **characterized in that** the securing element (56) is realized in the form of a peripheral bead.

10. The vehicle silencer according to one of claims 1 to 8, **characterized in that** the securing element (56) is realized in the form of individual positioning pins.

11. The vehicle silencer according to one of the preceding claims, **characterized in that** the retaining segment (50) has a wall thickness (70) between 0.3 mm and 5 mm, particularly between 0.4 mm and 2 mm, preferably between 0.5 mm and 0.7 mm.

12. The vehicle silencer according to one of the preceding claims, **characterized in that** the retaining segment (50) is designed to project relative to the first outer pipe section (45) or relative to the second outer pipe section (46) by a distance (74) between 5 mm and 50 mm, particularly between 7 mm and 20 mm, preferably between 10 mm and 15 mm.

13. The vehicle silencer according to one of the preceding claims, **characterized in that** a wall thickness (70) of the retaining segment (50) is slightly larger than the gap width (72) of the retaining groove (30).

## Revendications

1. Silencieux de véhicule (1) pour une conduite d'air de suralimentation d'un moteur à combustion interne avec turbocompresseur (7), comprenant :
au moins une première partie de carter (2), avec une première gaine extérieure (15), qui comprend une première paroi frontale (16), et une deuxième partie de carter (3), avec une deuxième gaine extérieure (26), qui comprend une deuxième paroi frontale (28), les parties de carter (2, 3) étant couplées entre elles dans une zone de raccordement (4) et formant une enveloppe extérieure (13) du silencieux de véhicule (1) ;
un élément interne de résonateur (14), qui est supporté dans au moins une des parties de carter (2, 3) et qui comporte au moins une cloison de séparation de chambre (22) ainsi qu'au moins un premier tronçon tubulaire (20) situé intérieurement, contigu à une périphérie intérieure (57) de la cloison de séparation de chambre (22), au moins une première (10) et une deuxième chambre de résonateur (11) étant constituées par les deux parties de carter (2, 3) et par l'élément interne de résonateur (14), l'élément interne de résonateur (14) comportant dans la zone d'une périphérie (44) extérieure de l'élément interne de résonateur (14) au moins un premier tronçon de retenue (50) situé extérieurement et, dans la première paroi frontale (16) et/ou dans la deuxième paroi frontale (28), une rainure de retenue (30) étant constituée, dans laquelle est reçu le tronçon de retenue (50), **caractérisé en ce qu'**un élément de blocage (56) est disposé dans la zone de la cloison de séparation de chambre (22) à l'extérieur sur l'élément interne de résonateur (14), l'élément de blocage (56) étant reçu entre la première partie de carter (2) et la deuxième partie de carter (3).

2. Silencieux de véhicule selon la revendication 1, **caractérisé en ce que** le tronçon de retenue (50) est constitué en tant que tronçon tubulaire qui est disposé de façon coaxiale au premier tronçon tubulaire (20) situé intérieurement de l'élément interne de résonateur (14).

3. Silencieux de véhicule selon la revendication 1, **caractérisé en ce que** le tronçon de retenue (50) est constitué en tant que segment tubulaire.

4. Silencieux de véhicule selon l'une des revendications précédentes, **caractérisé en ce que** la première partie de carter (2) et la deuxième partie de carter (3) sont constituées d'un matériau métallique, en particulier en tant que pièce de tôle réalisée par formage.

5. Silencieux de véhicule selon l'une des revendications précédentes, **caractérisé en ce que** l'élément interne de résonateur (14) est constitué en matière plastique.

6. Silencieux de véhicule selon l'une des revendications précédentes, **caractérisé en ce qu'**un espace annulaire (47) est constitué entre le tronçon de retenue (50) et la première gaine extérieure (15) et/ou la deuxième gaine extérieure (26).

7. Silencieux de véhicule selon l'une des revendications précédentes, **caractérisé en ce que**, sur l'élément interne de résonateur (14), en face du premier tronçon tubulaire (20) situé intérieurement, un deuxième tronçon tubulaire (33) situé intérieurement est contigu à cloison de séparation de chambre (22).

8. Silencieux de véhicule selon l'une des revendications précédentes, **caractérisé en ce qu'**un diamètre intérieur (67) du tronçon de retenue (50) est plus petit qu'un diamètre intérieur (66) de la rainure de retenue (30), le tronçon de retenue (50) étant de ce fait, dans l'état assemblé, déformé élastiquement, et un raccordement par liaison de force étant constitué entre le tronçon de retenue (50) et la rainure de retenue (30).

9. Silencieux de véhicule selon l'une des revendications précédentes, **caractérisé en ce que** l'élément de blocage (56) est constitué en tant que bourrelet périphérique.

10. Silencieux de véhicule selon l'une des revendications 1 à 8, **caractérisé en ce que** l'élément de blocage (56) est constitué sous la forme de tenons de positionnement individuels.

11. Silencieux de véhicule selon l'une des revendications précédentes, **caractérisé en ce que** le tronçon de retenue (50) présente une épaisseur de paroi (70) entre 0,3 mm et 5 mm, en particulier entre 0,4 mm et 2 mm, de préférence entre 0,5 mm et 0,7 mm.

12. Silencieux de véhicule selon l'une des revendications précédentes, **caractérisé en ce que** le tronçon de retenue (50) est constitué en faisant, par rapport au premier tronçon tubulaire (45) situé extérieurement ou par rapport au deuxième tronçon tubulaire (46) situé extérieurement, saillie sur une distance (74) entre 5 mm et 50 mm, en particulier entre 7 mm et 20 mm, de préférence entre 10 mm et 15 mm.

13. Silencieux de véhicule selon l'une des revendications précédentes, **caractérisé en ce qu'**une épaisseur de paroi (70) du tronçon de retenue (50) est légèrement plus grande que la largeur de fente (72) de la rainure de retenue (30).
